# EUROPÄISCHE PATENTSCHRIFT

(11) **EP 1 729 196 B1**
(45) Veröffentlichungstag und Bekanntmachung des Hinweises auf die Patenterteilung: **16.07.2014**
(21) Anmeldenummer: 06010379.3
(22) Anmeldetag: 19.05.2006
(51) Int. Cl.: G05D 1/02

(54) **Leitsystem für manuell geführte Fahrzeuge**
Guidance system for manually controlled vehicles
Système de commande pour véhicules conduits manuellement

(30) Priorität: 30.05.2005 DE 102005024620
(43) Veröffentlichungstag der Anmeldung: 06.12.2006
(73) Patentinhaber: Liebherr-Werk Nenzing GmbH, 6710 Nenzing (AT)
(72) Erfinder: Schneider, Klaus, 88145 Hergatz (DE); Sawodny, Oliver, Prof. Dr.-Ing., 70569 Stuttgart (DE); Arnold, Eckard, 98693 Ilmenau (DE)
(74) Vertreter: Laufhütte, Dieter

(56) Entgegenhaltungen:
- WO-A2-2004/021306
- US-A1- 2002 103 728
- US-A1- 2002 138 352
- US-A1- 2004 054 554
- US-A1- 2005 015 288
- US-B1- 6 240 362
- US-B1- 6 879 962

## Beschreibung

Die Erfindung betrifft ein Leitsystem für manuell geführte Fahrzeuge, wie beispielsweise Reachstacker oder Straddlecarrier.

Bislang wurden die Fahrten von manuell geführten lasttragenden Fahrzeugen, wie beispielsweise Reachstackern, Straddlecarrieren oder anderen lasttragenden Fahrzeugen, beispielsweise beim Umschlag im Hafen, manuell geführt. Durch diese unabhängige Führung der einzelnen Fahrzeuge ergeben sich jedoch recht viele Leerfahrten. So wird häufig ein Umschlagauftrag mit einem Fahrzeug, beispielsweise einem Reachstacker abgearbeitet und anschließend das Fahrzeug wieder an den Ausgangspunkt zurückgefahren.

US 6 879 962 B1 betrifft ein Logistikverfahren mit einem Logistik-Computerprogramm für Steuerung einer Vielzahl von Transportaufgaben, wobei ein Transportmanifest basierend auf verschiedenen Faktoren wie z.B. Lieferort, Standort vom Anbieter, Ladungsmaterial, Transportkosten usw. automatisch generiert werden kann.

WO 2004/021306 A2 bezieht sich auf Systeme und Verfahren zur Verkehrsinformationsbereitstellung insbesondere auf Systeme und Verfahren zum Antworten auf Benutzeranfragen in Bezug auf die wirtschaftlichste bzw. rationellste Route zwischen einem Ausgangspunkt und einem Zielpunkt.

US 2002/103728 A1 offenbart ein Verfahren zum Empfang der Transportdokumente und Generieren von Lademanifesten basierend auf den empfangenen Transportdokumenten.

US 2004/054554 A1 betrifft ein Leitsystem, mit denen die Produkte aus Produktionsstätte zum Ziel schneller und sicherer geliefert werden können.

US 2005/015288 A1 offenbart ein Verfahren zur Planung und Lieferung von Arbeitsmaterial für Produkte in einer Fabrik.

US 2002/138352 A1 betrifft ein Verfahren für Transportieren von Gütern, wobei eine Vielzahl von Zeitsteuerdaten verwendet wird, um einen Transportplan oder Zeitplan zu bestimmen und dynamisch zu steuern.

US 6 240 362 B1 bezieht sich auf ein Verfahren zur Planung eines Fahrzeugs in Echtzeit, um Fracht und Passgiere zu transportieren.

Aufgabe der Erfindung ist es, ein Leitsystem für manuell geführte Fahrzeuge zu schaffen, mit denen der Einsatz der Fahrzeuge optimiert werden soll, das heißt die Anzahl der Leerfahrten möglichst verringert werden soll.

Erfindungsgemäß wird diese Aufgabe durch ein Leitsystem für manuell geführte Fahrzeuge, wie beispielsweise Reachstacker oder Straddlecarrier, gemäß der Kombination der Merkmale des Anspruchs 1 gelöst. Erfindungsgemäß wird die Position der Fahrzeuge permanent automatisch erfaßt und dem Führungssystem zur Auswertung bereitgestellt. Ausgehend von extern bereit gestellten Transportauftragslisten wird eine optimierte Fahrzeugauftragszuweisung an die einzelnen Fahrzeuge vorgenommen. Für die Fahraufträge werden geeignete Fahrtrouten bestimmt. Die Fahraufträge einschließlich der Fahrtrouten werden automatisch an die Fahrzeugführer übermittelt und deren Ausführung wird überwacht. Dieses System eignet sich insbesondere zum Containertransport im Hafenbetrieb.

Damit kann gegenüber einer manuellen Führung der Fahrzeugroute durch Reduktion der Leerfahrten verkürzte Fahrwege eine Verkürzung der Bearbeitungsdauer der Transportaufträge bzw. eine Erhöhung der Transportkapazität der Gesamtanlage erreicht werden.

Vorteilhafte Ausgestaltungen der Erfindung ergeben sich aus den sich an den Hauptanspruch anschließenden Unteransprüchen.

Demnach kann die von dem Fahrzeug aufgenommene Last mittels Bildverarbeitung automatisch identifizierbar sein.

In einem statischen System können die Fahrwege mit den Fahraufträgen an die Fahrzeuge übermittelt und anschließend nicht mehr geändert werden.

Eine alternative ergibt sich im dynamischen Routing dadurch, dass die Fahrwege während der Abarbeitung der Fahraufträge angepaßt werden.

Vorteilhaft ist ein dynamisches Simulationsmodel über eine Schnittstelle anbindbar.

Ein Datenbanksystem kann zur Überwachung des dynamischen Routings vorgesehen sein.

Das erfindungsgemäße Leitsystem ermöglicht die Verminderung der Investitions-und Betriebskosten. Dies ergibt sich dadurch, dass eine geringere Zahl von Fahrzeugen eingesetzt wird. Andererseits wird der Durchsatz erhöht und der Personalbedarf reduziert. Beim dynamischen Routing wird der Anteil an Verkehrswegen verringert und damit die Stack-Kapazität vergrößert. Eine automatische Positionserfassung erhöht die Datenqualität durch Erfassung der Ist-Position der einzelnen Last, das heißt beispielsweise der einzelnen Container.

Übergeordnet ist ein sogenanntes Terminal Control und Informations-System vorhanden, welches eine Verwaltungsebene darstellt. Dem zugeordnet über ein Systeminterface ist ein zentrales Planungs- und Routingsystem, die sogenannte Steuerebene. Diese ist über WLAN-Anbindung mit den einzelnen Fahrzeugen verbunden, in der sogenannten Prozeßausführungsebene. Die einzelnen Ablagepositionen können von den Fahrzeugen an das Terminal Control und Informations-System zurückgemeldet werden und dort in einem Datenspeicher abgelegt werden.

In einer bevorzugten Lösung der Erfindung sind die einzelnen Fahrzeuge mit Einrichtungen zur genauen Positionserfassung beispielsweise auf der Basis von GPS ausgerüstet. Die entsprechenden Fahrzeuge können automatisch mit dem Führungssystem kommunizieren. Diese On-Board-Units werden über WLAN an die Steuerebene angebunden.

Die im Zusammenhang mit der Bearbeitung von Fahraufträgen entscheidenden Funktionalitäten bestehen in:
- der permanenten Erfassung und zyklischen Übermittlung der Fahrzeugposition an das Fahrzeugsystem sowie,
- der Übermittlung, Verwaltung und Visualisierung von Fahraufträgen und
- der Möglichkeit der exakten Erfassung von Container-Ablagepositionen und deren Übermittlung in das Terminal Control und Informations-System, wodurch eine Erhöhung der Datenqualität gegenüber einer manuellen Erfassung erreicht wird.

Das Führungssystem übernimmt Transportaufträge aus dem Terminal Control und Informations-System und berechnet unter Berücksichtigung
- der aktuellen Fahrzeugposition,
- der aktuellen bearbeiteten Fahraufträge und
- der Leistungs- und Verfügbarkeitsdaten
eine optimierte Reihung und Zuweisung von Fahraufträgen an die einzelnen Fahrzeuge (sogenanntes Scheduling) sowie optimierte Fahrwege zur Abarbeitung der Fahraufträge (sogenanntes Routing).

Zusätzlich können Verfahren des Operations Research zum Einsatz kommen. Hierzu zählen beispielsweise zeitbasierte Lösungen von Travelling Salesman-Problemen und weitere diskrete Optimierungsverfahren.

Die Kriterien der Optimierung wie der Optimierungshorizont, das heißt die Anzahl der in der Optimierung berücksichtigten zukünftigen Transportaufträge, werden an die konkreten Einsatzbedingungen angepaßt.

Für die Ermittlung und Zuweisung der Fahrwege (Routing) können abgestufte Strategien zum Einsatz kommen.

So werden beim statischen Routing die Fahrwege mit den Fahraufträgen an die Fahrzeuge übermittelt und später nicht mehr geändert. Die Berechnung der Fahrwege kann ohne oder mit Berücksichtigung der Fahrwege der übrigen Fahrzeuge erfolgen. Die Vorfahrtregeln an Kreuzungen sowie Einbahnstraßenregelungen sind vorab festgelegt und werden durch das System dynamisch nicht beeinflußt. Vorabuntersuchungen an Simulationsmodellen unterstützen die Auswahl der Fahrwege.

Eine Alternative besteht im dynamischen Routing. Dort werden die Fahrwege während der Abarbeitung der Fahraufträge angepaßt. Die Vorfahrtregeln an Kreuzungen sowie Einbahnstraßenregelungen werden durch das System dynamisch festgelegt. Aus Sicherheitserfordernissen sind angepaßte Anti-Kollisions-Strategien berücksichtigt. Für den Fall des Kommunikationsausfalls sind sogenannte Rückfall-Lösungen einprogrammiert.

Die Fahraufträge und Fahrtrouten werden automatisch an die Fahrzeuge übermittelt und dort visualisiert. Der Fahrer quittiert die Übernahme und die Erledigung von Fahraufträgen. Die Daten dieser Fahrauftragsverwaltung werden wiederum automatisch mit dem Führungssystem abgeglichen.

Durch die vorliegende Erfindung wird die Auftragsreihung und die Auftragszuweisung optimiert. Wobei eine Reduktion von Lehrfahrten sowie die Bildung von Fahrauftragszyklen herbeigeführt wird. Die Optimierung der Fahrwege verringert direkt die notwendigen Bearbeitungszeiten von Transportaufträgen. Durch die kombinierte Betrachtung beider Teilaufgaben als integrierte Optimierungsaufgabe läßt sich eine weitere Absatzerhöhung erzielen.

Dynamische Simulationsmodelle und Umschlagsprozesse können während der Verfahrensentwicklung, aber auch für Vorabuntersuchungen und Anpassungen an ein konkretes Terminalsystem eingesetzt werden.

Besonders vorteilhaft besitzt das Führungssystem eine eigenständige Datenbank, deren Aufgabe in der Transport- und Fahrauftragsverwaltung, der Fahrzeugdatenverwaltung sowie der Verwaltung von Layout-Informationen und Systemparametern besteht. Im Laufe der Projektbearbeitung ist die erforderliche Struktur des Datenbanksystems zu erarbeiten und eine eventuell notwendige Strukturierung in Echtzeit-, Auftrags- und Archivdatenbank vorzunehmen.

Die Schnittstelle zum Terminal Control und Management-System kann in Abhängigkeit vom Einsatz in Form einer Standardschnittstelle einer Transportauftragsverwaltung aber auch als einfache Transportauftragsliste oder als SQL-basierte Datenbankkombination mit dem Terminal Control und Management-System realisiert werden. Im Optimierungsmodul werden basierend auf den Transportaufträgen optimierte Fahraufträge sowie Fahrtrouten für die einzelnen Fahrzeuge generiert.

Die Fahrzeugerfassung und -verwaltung beinhaltet neben der Kommunikation mit den einzelnen Fahrzeugen die Auswertung der übermittelten Positions- und Geschwindigkeitsdaten.

Die grafische Bedienoberfläche ermöglicht Bedienereingriffe in die Auftragsverwaltung sowie eine Visualisierung der geplanten Fahrzeugbewegungen. Es kann ein Reportgenerator vorhanden sein, der die Auswertung und Überwachung des Betriebs der Gesamtanlage sowie die Datenarchivierung übernimmt.

Die Schnittstelle zu einem Simulationssystem dient zur optimalen Anbindung eines dynamischen Simulationsmodells, das beispielsweise vor und während der Inbetriebnahme das Parametertuning unterstützt oder Informationen zum statischen Routing liefert.

Zur Realisierung und Überwachung eines dynamischen Routings ist ein spezielles Datenbanksystem erfindungsgemäß vorgesehen, das den erhöhten Anforderungen an Echtzeitfähigkeit und sicherheitsrelevanten Funktionalitäten Rechnung trägt.

## Patentansprüche

1. Leitsystem für manuell geführte Fahrzeuge, wie bspw. Reachstacker oder Straddlecarrier, bei dem
- die Position der Fahrzeuge permanent automatisch erfaßt und einem Führungssystem zur Auswertung zugeführt wird,
- ausgehend von extern bereitgestellten Transportauftragslisten eine optimierte Fahrauftragszuweisung an die einzelnen Fahrzeuge erfolgt,
- geeignete Fahrtrouten für die Fahraufträge sowie Scheduling von Fahraufträgen bestimmt werden,
- die Fahraufträge einschließlich der Fahrtrouten automatisch an die Fahrzeugführer übermittelt und deren Ausführung überwacht werden,
**dadurch gekennzeichnet, daß**
- Fahrwege während der Abarbeitung der Fahraufträge dynamisch angepaßt werden,
wobei Scheduling von Fahraufträgen und Routing für Fahraufträge unter Berücksichtigung der aktuellen bearbeiteten Fahraufträge berechnet werden.

2. Leitsystem nach Anspruch 1, **dadurch gekennzeichnet, daß** die von dem Fahrzeug aufgenommene Last mittels Bildverärbeitung automatisch identifizierbar ist

3. Leitsystem nach einem der vorangehenden Ansprüche, **dadurch gekennzeichnet, daß** ein dynamische Simulationsmodell über eine Schnittstelle anbindbar ist.

4. Leitsystem nach einem der vorangehenden Ansprüche, **dadurch gekennzeichnet, daß** ein Datenbanksystem zur Überwachung eines dynamischen Routings vorhanden ist.

## Claims

1. A guidance system for manually guided vehicles such as reach stackers or straddle carriers, in which
- the position of the vehicles is permanently automatically detected and supplied to a guiding system for evaluation,
- starting from transport job lists made available externally, an optimized travel job assignment to the individual vehicles takes place,
- suitable travel routes for the travel jobs and scheduling of travel jobs are determined,
- the travel jobs, including the travel routes, are automatically transferred to the vehicle operators and their carrying out is monitored,
**characterized in that**
travel routes are adapted dynamically during the processing of the travel jobs,
wherein the scheduling of travel jobs and routing for travel jobs are calculated while taking account of the current processed travel jobs.

2. A guidance system in accordance with claim 1, **characterized in that** the load taken up by the vehicle can be automatically identified by means of image processing.

3. A guidance system in accordance with one of the preceding claims, **characterized in that** a dynamic simulation model can be connected via an interface.

4. A guidance system in accordance with one of the preceding claims, **characterized in that** a database system is present to monitor a dynamic routing.

## Revendications

1. Système de commande pour véhicules conduits manuellement, comme par exemple gerbeurs ou chariots cavaliers, dans lequel :
- la position des véhicules est de façon permanente et automatique détectée et transmise à un système de guidage aux fins de l'analyse ;
- une affectation à une tâche de déplacement optimisée est réalisée pour les véhicules individuels à partir d'une liste de tâches de transport fournie de façon externe ;
- des parcours de déplacement appropriés pour les tâches de déplacement, ainsi qu'une planification des tâches de déplacement, sont déterminés ;
- les tâches de déplacement, y compris les parcours de déplacement, sont transmis automatiquement au conducteur des véhicules et leur exécution est surveillée ;
**caractérisé en ce que** :
- les itinéraires sont adaptés de façon dynamique pendant l'élaboration des tâches de déplacement,
étant entendu que la planification des tâches de déplacement et la définition des parcours pour les tâches de déplacement sont calculées en prenant en considération les tâches de déplacement actuelles traitées.

2. Système de commande selon la revendication 1, **caractérisé en ce que** la charge prise par le véhicule peut être identifiée automatiquement au moyen d'un traitement d'image.

3. Système de commande selon l'une des revendications précédentes, **caractérisé en ce qu'**un modèle de simulation dynamique peut être connecté par le biais d'une interface.

4. Système de commande selon l'une des revendications précédentes, **caractérisé en ce qu'**un système de banque de données est prévu pour la surveillance d'une définition dynamique des parcours.
